# EUROPEAN PATENT APPLICATION

(11) **EP 4 421 613 A1**
(43) Date of publication of application: **28.08.2024**
(21) Application number: 23216859.1
(22) Date of filing: 14.12.2023
(51) Int. Cl.: G06F 3/14, G09G 5/393, G09G 5/395, G06F 5/10, G06F 5/16

(54) **SCREEN CASTING METHOD, HARDWARE SYSTEM AND STORAGE MEDIUM**

(30) Priority: 27.02.2023 CN 202310171609
(71) Applicant: Nanjing SemiDrive Technology Ltd., Technoloy Research & Innovation Park, Jiangbei New Area, Nanjing (CN)
(72) Inventor: CAI, Wenkai, Nanjing (CN); JIN, Hengzhuang, Nanjing (CN); CUI, Shang, Nanjing (CN)
(74) Representative: Ziebig Hengelhaupt Intellectual Property Attorneys Patentanwaltskanzlei PartGmbB

(57) **Abstract**

The present application discloses a screen casting method, a hardware system, a computer-readable storage medium, a screen sharing system and a transportation means relating to the technical field of screen casting. The screen casting method comprises: sending a first request for requesting screen casting to a second hardware system by a first hardware system; wherein the first hardware system and the second hardware system are connected by a bus; acquiring address information fed back by the second hardware system based on the first request, the address information is used for identifying a cache space of the second hardware system; sending screen casting data of the first hardware system to the cache space via the bus based on the address information, the screen casting data is used for the second hardware system to display the corresponding screen casting content. The first hardware system and the second hardware system are connected by the bus, which has a larger bandwidth, and the transmission speed of the screen casting data is faster. This is beneficial for improving the smoothness of the display of the screen casting content and lowering the production cost without occupying the bandwidth of the on-board Ethernet.

## Description

### FIELD OF THE INVENTION

The present application relates to the technical field of screen casting, in particular to a screen casting method, a hardware system, a computer-readable storage medium, a screen sharing system, and a transportation means.

### DESCRIPTION OF RELATED ART

Under the impetus of the development trend of electrification and intelligence of transportation means, the number of on-board display screens is increasing. For example, in some transportation means, display screens are not limited to being provided in the area of the instrument panel of the cab, but can also be equipped for the copilot and each rear seat to improve the riding experience. This also provides the possibility for screen sharing between the on-board display screens, for example, the copilot shares interesting video streaming content to display screens of rear passengers. In general, the screen casting content is shared between the on-board display screens via the on-board Ethernet, which not only occupies the bandwidth of the on-board Ethernet, but also costs a lot.

### SUMMARY OF THE INVENTION

In view of the above problem existing in the prior art, the present application provides a screen casting method, a hardware system, a computer-readable storage medium, a screen sharing system and a transportation means, and the technical solution adopted by the embodiment of the present application as follows.

A first aspect of the present application provides a screen casting method, which comprises: sending a first request for requesting screen casting to a second hardware system by a first hardware system; wherein, the first hardware system and the second hardware system are connected by a bus; acquiring address information fed back by the second hardware system based on the first request, wherein the address information is used for identifying a cache space of the second hardware system; sending screen casting data of the first hardware system to the cache space via the bus based on the address information, wherein the screen casting data is used for the second hardware system to display the corresponding screen casting content.

In some embodiments, acquiring the address information fed back by the second hardware system based on the first request comprises: acquiring the address information fed back by the second hardware system; extracting a cache unit from a first circular linked list; recording the address information in the cache unit; adding the cache unit containing the address information into a second circular linked list.

In some embodiments, sending the screen casting data of the first hardware system to the cache space via the bus based on the address information comprises: acquiring screen casting data of the first hardware system; extracting a cache unit containing the address information from the second circular linked list; sending the screen casting data to the cache space via the bus based on the address information extracted from the cache unit; adding a cache unit not containing the address information into the first circular linked list.

In some embodiments, acquiring the screen casting data of the first hardware system comprises: acquiring the screen casting data of the first hardware system by a virtual display controller.

In some embodiments, it further comprises: discarding the screen casting data of the first hardware system in the case that there is no cache unit containing the address information in the second circular linked list.

In some embodiments, it further comprises: returning the acquired address information to the second hardware system in the case that there is no cache unit in the first circular linked list.

The second aspect of the present application provides a screen casting method, comprising: acquiring a first request sent by a first hardware system by a second hardware system; wherein, the first hardware system and the second hardware system are connected by a bus, and the first request is used for requesting screen casting to the second hardware system; feeding back address information to the first hardware system based on the first request, wherein the address information is used for identifying a cache space of the second hardware system; acquiring the screen casting data sent by the first hardware system via the bus based on the address information, and saving the screen casting data in the corresponding cache space; displaying the corresponding screen casting content by a display unit of the second hardware system based on the screen casting data in the cache space.

In some embodiments, feeding back the address information to the first hardware system based on the first request comprises: creating the cache space in the second hardware system based on the first request; feeding back the address information of the cache space to the first hardware system.

In some embodiments, displaying the corresponding screen casting content by the display unit of the second hardware system based on the screen casting data in the cache space comprises: acquiring the screen casting data from the cache space by a virtual camera and transmitting the screen casting data to the display unit; displaying the corresponding screen casting content based on the screen casting data by the display unit.

A third aspect of the present application provides a hardware system. The hardware system serves as a first hardware system or a second hardware system, the hardware system at least comprises a storage on which a program is stored and a processor. The processor implements the method as described above when executing the program on the storage.

A fourth aspect of the present application provides a computer-readable storage medium, in which computer-executable instructions are stored, and when the computer-executable instructions in the computer-readable storage medium are executed, the method as described above is implemented.

A fifth aspect of the present application provides a screen sharing system, which comprises a first hardware system and a second hardware system, wherein the first hardware system and the second hardware system are connected by a bus; the first hardware system is configured to send a first request for requesting screen casting to a second hardware system; the second hardware system is configured to feed back address information to the first hardware system based on the first request, wherein the address information is used for identifying a cache space of the hardware system; the first hardware system is further configured to send screen casting data of the first hardware system to the cache space via the bus based on the address information; the second hardware system is further configured to display the corresponding screen casting content by the display unit of the second hardware system based on the screen casting data in the cache space.

A sixth aspect of the present application provides a transportation means comprising the screen sharing system as described above.

The screen casting method of the embodiment of the present application sends the first request for requesting screen casting to the second hardware system by the first hardware system when the screen casting operation needs to be performed, the second hardware system feeds back the address information to the first hardware system based on the first request, wherein the address information can identify the cache space of the second hardware system, the screen casting data is sent to the cache space by the first hardware system via the bus, based on the address information, the corresponding screen casting content is displayed by the second hardware system based on the screen casting data in the cache space, so as to cast the screen between the first hardware system and the second hardware system, the first hardware system and the second hardware system are connected by the bus, which has a larger bandwidth, and the transmission speed of the screen casting data is faster. This is beneficial for improving the smoothness of the display of the screen casting content and lowering the production cost without occupying the bandwidth of on-board Ethernet.

### BRIEF DESCRIPTION OF THE DRAWINGS

FIG. 1 is a flowchart of a screen casting method of a first embodiment of the present application;
FIG. 2 is a flowchart of step S 120 in the screen casting method of the first embodiment of the present application;
FIG. 3 is a flowchart of step 5130 in the screen casting method of the first embodiment of the present application;
FIG. 4 is a flowchart of a screen casting method of a second embodiment of the present application;
FIG. 5 is a flowchart of a screen casting method of a third embodiment of the present application;
FIG. 6 is a structural block diagram of a hardware system of a fourth embodiment of the present application;
FIG. 7 is a system architecture diagram of a screen sharing system of a sixth embodiment of the present application.

### DETAILED DESCRIPTION OF EMBODIMENTS

Various aspects and features of the present application are described herein with reference to the accompanying drawings.

It should be understood that various modifications can be made to the embodiments applied herein. Therefore, the above specification should not be regarded as a limitation, but only as an example of an embodiment. Those skilled in the art will conceive that other modifications within the scope and spirit of the present application.

The accompanying drawings contained in and constituting a part of the specification illustrate embodiments of the present application, and are used for explaining the principle of the present application together with the general description of the present application given above and the detailed description of embodiments given below.

These and other features of the present application will become apparent from the following description of preferred forms of embodiments given as non-limiting examples with reference to the accompanying drawings.

The above and other aspects, features, and advantages of the present application will become more apparent in view of the following detailed description when combined with the accompanying drawings.

Hereinafter, specific embodiments of the present application will be described with reference to the accompanying drawings; however, it should be understood that embodiments of the present application are only examples of the present application, which can be implemented in various ways. Well-known and/or repeated functions and structures have not been described in detail to avoid obscuring the present application with unnecessary or redundancy details. Therefore, the specific structural and functional details applied herein are not intended to be limiting, but are only used as the basis and representative basis of the claims for teaching those skilled in the art to variously use the present application with substantially any suitable detailed structure.

The phrases "in one embodiment", "in another embodiment", "in yet another embodiment" or "in other embodiments" can be used in the specification, which can all refer to one or more of the same or different embodiments according to the present application.

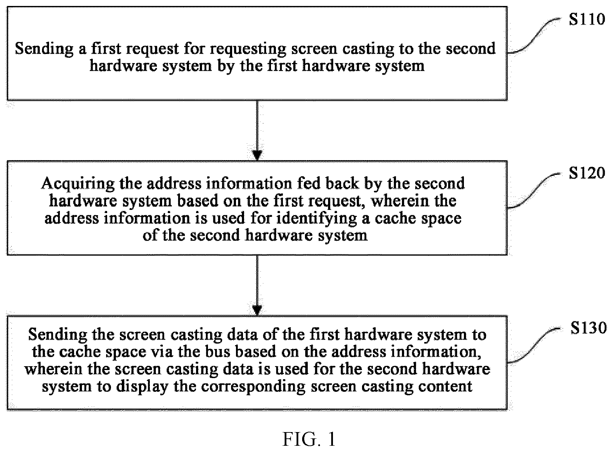

The first embodiment of the present application provides a screen casting method, which is applied to a first hardware system. FIG. 1 is a flowchart of a screen casting method of a first embodiment of the present application. With reference to FIG. 1, the screen casting method of the first embodiment of the present application may specifically comprise the following steps.

S110, a first request for requesting screen casting is sent to a second hardware system by a first hardware system. Wherein, the first hardware system and the second hardware system are connected by a bus.

Optionally, the first hardware system and the second hardware system may each comprise a plurality of hardware. For example, the first hardware system and the second hardware system may each comprise hardware such as a processor, a memory, and a display control unit. In physical form, a plurality of hardware in the same hardware system may be integrated on a die of a SOC (system on a chip). A plurality of hardware in the same hardware system may be connected by the bus inside the system. For example, the processor, the memory, and the display control unit belonging to the same hardware system may be connected by the system bus.

A "die" typically refers to a functional silicon block on a chip. In the current embodiment, during the manufacturing process, these functional silicon blocks are cut from a wafer, and interconnected via a Die-to-Die Communication Interface (DCI) bus. Subsequently, they are packaged together to form a System-on-Chip (SoC).

Optionally, the second hardware system may be integrated on another die of the same SOC, the first hardware system and the second hardware system may be connected by the bus between the systems. For example, the first hardware system may be provided with a first connection manager. The second hardware system may be provided with a second connection manager. The first connection manager and the second connection manager may be connected by the bus between systems. Data interaction can be performed between the first hardware system and the second hardware system through the first connection manager, the second connection manager and the bus between the systems.

Optionally, a bus between the systems can choose a die-to-die data transmission bus that meets the requirements for screen casting data transmission. The bus between the systems comprises but is not limited to a series of DCI buses, for example, a PCI (Peripheral Component Interconnect) bus, a PCI-X (Peripheral Component Interconnect eXtended) bus, an AGP (Accelerated Graphics Port) bus, a PCI Express (Peripheral Component Interconnect Express) bus, ethernet, Compute Express Link (CXL), Unified Die-to-Die Interconnect and Controller Interface (UCIE) and the like.

Optionally, the first hardware system may send the first request to the second hardware system in response to an operational command to request the screen casting to the second hardware system. Taking the application of the first hardware system and the second hardware system to a vehicle as an example, a touch display unit of the first hardware system may be provided in front of the copilot and a touch display unit of the second hardware system may be provided in front of the rear seat. For example, the touch display unit of the second hardware system may be provided on the back side of the copilot seat. When the user seated in the copilot seat needs to share the viewing content with the user seated in the rear seat, he/she can operate the touch display unit in front to select a screen casting option and select a screen casting object, that is, the second hardware system. The touch display unit may generate a screen casting instruction in response to the operation of the user, and the screen casting instruction can be used for instructing the first hardware system to cast the screen to the second hardware system. The first hardware system may send the first request to the second hardware system based on the screen casting instruction.

S120, the address information fed back by the second hardware system is acquired based on the first request, wherein the address information is used for identifying a cache space of the second hardware system.

Optionally, the second hardware system acquires the first request, and it may determine the address information of its own cache space based on the first request and may feed back the address information to the first hardware system. For example, when the screen casting operation needs to be performed, the first hardware system may send the Socket information containing the first request to the second hardware system in response to the operational command, and the second hardware system may feed back the Socket information containing the address information to the first hardware system.

Optionally, the cache space may be dedicated to storing the screen casting data of this screen casting operation. For example, the second hardware system may create a cache space in the memory of the second hardware system based on the first request, acquire the address information of the cache space, and feed back the address information to the first hardware system.

Optionally, the cache space may also be used for caching data transmitted between the first hardware system and the second hardware system based on the bus between the systems. That is, the cache space may also be a cache space equipped for the bus between systems, and the data sent based on the bus between the systems may be cached in the cache space. Alternatively, the cache space may also be other cache spaces that can cache the screen casting data.

Optionally, the cache space may be a cache space in the memory of the second hardware system or a cache space in the cache of the second hardware system. For example, the second hardware system may apply for one or more cache spaces in the memory in response to the first request.

S130, the screen casting data of the first hardware system is sent to the cache space via the bus based on the address information. The screen casting data is used for the second hardware system to display the corresponding screen casting content.

Optionally, the bus may comprise a plurality of data channels, and the first request and address information may be transmitted between the first hardware system and the second hardware system based on one data channel. The first hardware system may send the screen casting data to the second hardware system based on another data channel to ensure the smooth and continuous transmission of the address information and the screen casting data between the two hardware systems.

Optionally, the first hardware system may be provided with a virtual display controller, which may be formed by software. The first hardware system may acquire the screen casting data of the first hardware system by the virtual display controller. Optionally, the first hardware system may start the virtual display controller when powered on, or may start the virtual display controller in response to the operational command instructing to perform the screen casting operation.

Optionally, the second hardware system may have a plurality of cache spaces. The second hardware system may cyclically feed back the address information of the plurality of cache spaces to the first hardware system based on the screen casting rules. The first hardware system continuously acquires the screen casting data, and sequentially sends the screen casting data to the corresponding cache space based on each address information. The second hardware system may cyclically extract the screen casting data from each cache space, and display the corresponding screen casting content based on the screen casting data by its own display unit to ensure the smoothness of the screen.

Optionally, the second hardware system may be provided with a virtual camera. The second hardware system may extract the screen casting data from the cache space by the virtual camera, and control the display unit to display the corresponding screen casting content based on the screen casting data. Similar to the virtual display controller, the virtual camera may also be formed by software. The second hardware system may start the virtual camera when powered on, or may start the virtual camera in response to the first request.

It can be understood that the first hardware system may also be provided with a virtual camera, so that the first hardware system can accept screen casting from other hardware systems including the second hardware system. The second hardware system may also be provided with a virtual display controller, so that the second hardware system can also send the screen casting data to other hardware systems including the first hardware system.

In addition, the first hardware system is not limited to acquiring the screen casting data by the virtual display controller, but also may acquire the screen casting data in other ways. For example, the first hardware system may also comprise a physical controller to acquire the screen casting data. The second hardware system is not limited to extracting the screen casting data from the cache space by the virtual camera, but also may control the display unit to display the screen casting content in other ways. For example, the second hardware system may also comprise a physical controller, by which the screen casting data can be extracted from the cache space, and control the display unit to display the corresponding screen casting content.

In the screen casting method according to the embodiment of the present application, the first request for requesting screen casting is sent to the second hardware system by the first hardware system when the screen casting operation needs to be performed. The second hardware system feeds back the address information to the first hardware system based on the first request, the address information can identify the cache space of the second hardware system. The screen casting data is sent to the cache space by the first hardware system via the bus, based on the address information. The corresponding screen casting content is displayed by the second hardware system based on the screen casting data in the cache space, so as to cast the screen between the first hardware system and the second hardware system. The first hardware system and the second hardware system are connected by the bus, which has a larger bandwidth, and the transmission speed of the screen casting data is faster. This is beneficial for improving the smoothness of the display of the screen casting content and lowering the production cost without occupying the bandwidth of the on-board Ethernet.

In concrete implementation, the first hardware system may be provided with a caching tool for caching the address information. The second hardware system may be provided with a plurality of cache spaces, and cyclically execute, based on the screen casting rules, the operations of extracting the screen casting data from the cache spaces, controlling the display unit to display the corresponding display content, sending the address information of the corresponding cache space to the first hardware system. The first hardware system may cache the address information in the caching tool, and extract, based on the cache rules, the address information from the caching tool upon acquiring the screen casting information, and send the screen casting data to the corresponding cache space based on the address information. In this way, the congestion of the address information can be avoided.

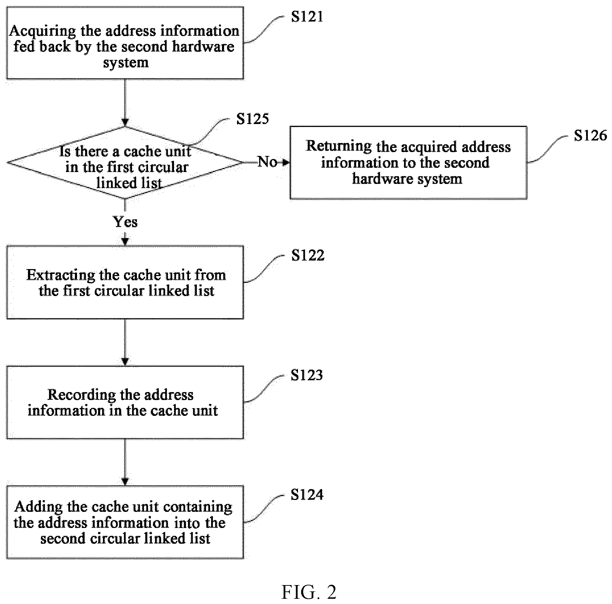

With reference to FIG. 2, in some embodiments, in step S120, the address information fed back by the second hardware system is acquired based on the first request, which may comprise the following steps.

5121, the address information fed back by the second hardware system is acquired.

S122, a cache unit is extracted from a first circular linked list.

S123, the address information is recorded in the cache unit.

S124, the cache unit containing the address information is added into a second circular linked list.

Optionally, the first hardware system may be provided with the first circular linked list and the second circular linked list. The first circular linked list is used for storing the cache unit not containing the address information, and the second circular linked list is used for storing the cache unit containing address information. The cache unit is used for recording the address information.

Optionally, the first hardware system may create the first circular linked list, the second circular linked list, and a receiving thread in response to the operational command. The address information sent by the second hardware system is received through the receiving thread, a cache unit is extracted from the first circular linked list, the acquired address information is recorded in the cache unit, and the cache unit containing the address information is added into the second circular linked list. In this way, the congestion of the address information can be avoided, and there is no need to change the pointers of other cache units after the cache unit is extracted from or added into the circular linked list, which is beneficial for simplifying the data processing logic. Certainly, the first circular linked list and the second circular linked list may also be created in advance.

In some embodiments, step S120 may further comprise the following steps.

Step S125, it is determined whether there is a cache unit in the first circular linked list after the address information fed back by the second hardware system is acquired. If YES, step S122 is executed, and if NO, step S126 is executed.

Step S126, the acquired address information is returned to the second hardware system.

Optionally, it may be determined whether there is a cache unit in the first circular linked list after the receiving thread acquires the address information fed back by the second hardware system. When there is a cache unit in the first circular linked list, the receiving thread extracts the cache unit from the first circular linked list and records the address information in the cache unit. When there is no cache unit in the first circular linked list, the receiving thread returns the acquired address information to the second hardware system to avoid the congestion of the system.

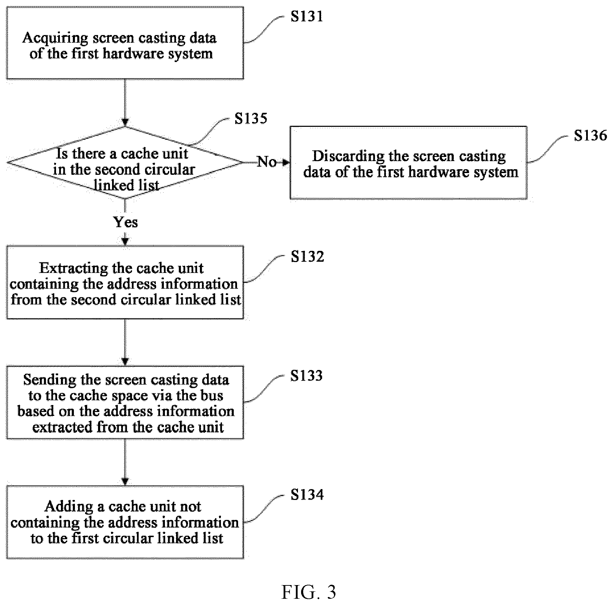

With reference to FIG. 3, in some embodiments, step S130, the screen casting data of the first hardware system is sent to the cache space via the bus based on the address information, which may comprise the following steps.

5131, the screen casting data of the first hardware system is acquired.

S132, the cache unit containing the address information is extracted from the second circular linked list.

S133, the screen casting data is sent to the cache space via the bus based on the address information extracted from the cache unit.

S134, the cache unit not containing the address information is added into the first circular linked list.

Optionally, the first hardware system may extract the cache unit containing the address information from the second circular linked list in response to the virtual display controller acquiring the screen casting data, and send the screen casting data to the cache space via the bus based on the address information recorded in the cache unit. The cache unit not containing the address information is returned to the first circular linked list after the address information is extracted. In this way, it can ensure that the first hardware system continuously and orderly transmits the screen casting data to the second hardware system, and interference between the frames of the screen casting data can be prevented, so that the second hardware system can smoothly display the screen casting content.

Optionally, the cache space of the second hardware system may be a cache space shared by the first hardware system and the second hardware system. That is, the first hardware system owns the control right of the cache space. At this time, the first hardware system may copy the screen casting data into the cache space based on the address information. Certainly, the cache space may also be a non-shared cache space. At this time, the first hardware system may send the screen casting data to the second hardware system based on the address information, and the second hardware system will cache the screen casting data into the cache space on its own. For example, the second hardware system may create another receiving thread, through which the screen casting data sent by the first hardware system is cached into the cache space.

In some embodiments, step S130 may further comprise the following steps.

S135, after the screen casting data of the first hardware system is acquired, it is determined whether there is a cache unit containing the address information in the second circular linked list, if YES, step S 132 is executed, if NO, step S136 is executed.

S136, the screen casting data of the first hardware system is discarded.

Optionally, the first hardware system may determine whether there is a cache unit in the second circular linked list in response to the virtual display controller acquiring the screen casting data. If there is a cache unit in the second circular linked list, the cache unit containing the address information is extracted from the second circular linked list. The address information is extracted from the cache unit, and the screen casting data is sent to the cache space via the bus based on the address information. If there is no cache unit in the second circular linked list, the screen casting data of the current frame is discarded to avoid the congestion of the system.

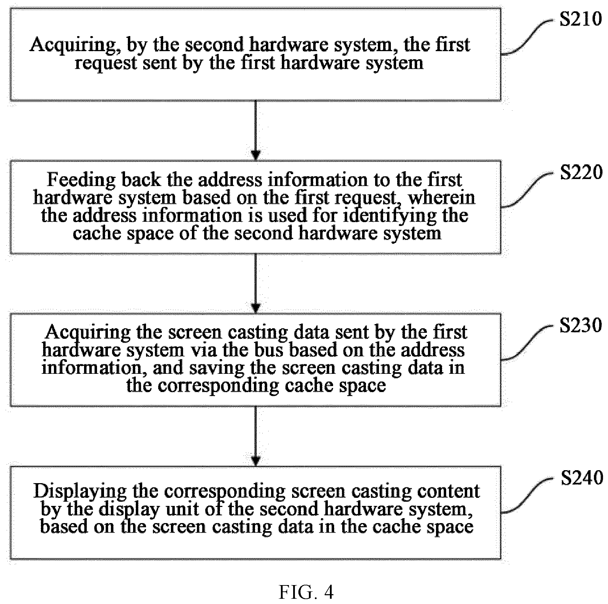

The second embodiment of the present application provides a screen casting method, which is applied to a second hardware system. FIG. 4 is a flowchart of the screen casting method of the second embodiment of the present application. With reference to FIG. 4, the screen casting method of the second embodiment of the present application may specifically comprise the following steps.

S210, the first request sent by the first hardware system is acquired by the second hardware system. Wherein, the first hardware system and the second hardware system are connected by the bus, and the first request is used for requesting the screen casting to the second hardware system.

Optionally, the first hardware system and the second hardware system may each comprise a plurality of hardware. For example, both the first hardware system and the second hardware system may each comprise hardware such as a processor, a memory, and a display control unit. In physical form, a plurality of hardware in the same hardware system may be integrated on a die of a SOC (system on a chip). A plurality of hardware in the same hardware system may be connected by the bus inside the system. For example, the processor, the memory, and the display control unit belonging to the same hardware system may be connected by the system bus.

Optionally, the second hardware system may be integrated on another die of the same SOC, the first hardware system and the second hardware system may be connected by the bus between the systems. For example, the first hardware system may be provided with a first connection manager, and the second hardware system may be provided with a second connection manager, and the first connection manager and the second connection manager may be connected by the bus between systems. Data interaction can be performed between the first hardware system and the second hardware system through the first connection manager, the second connection manager, and the bus between the systems.

Optionally, a bus between the systems can choose a die-to-die data transmission bus that meets the requirements for screen casting data transmission. The bus between the systems comprises but is not limited to a series of DCI buses, for example, a PCI (Peripheral Component Interconnect) bus, a PCI-X (Peripheral Component Interconnect eXtended) bus, an AGP (Accelerated Graphics Port) bus, a PCI Express (Peripheral Component Interconnect Express) bus, ethernet, Compute Express Link (CXL), Unified Die-to-Die Interconnect and Controller Interface (UCIE) and the like.

Optionally, the first hardware system may send the first request to the second hardware system in response to the operational command to request the screen casting to the second hardware system. Taking the application of the first hardware system and the second hardware system to a vehicle as an example, the touch display unit of the first hardware system may be provided in front of the copilot and a touch display unit of the second hardware system may be provided in front of the rear seat. For example, the touch display unit of the second hardware system may be provided on the back side of the copilot seat. When the user seated in the copilot seat needs to share the viewing content with the user seated in the rear seat, he/she may operate the touch display unit in front to select a screen casting option and select a screen casting object, that is, the second hardware system. The touch display unit may generate a screen casting instruction in response to the operation of the user, and the screen casting instruction may be used for instructing a first hardware system to cast the screen to a second hardware system. The first hardware system may send the first request to the second hardware system based on the screen casting instruction.

S220, the address information is fed back to the first hardware system based on the first request, wherein the address information is used for identifying a cache space of the second hardware system.

Optionally, the second hardware system acquires the first request, and it may determine the address information of its own cache space based on the first request and may feed back the address information to the first hardware system. For example, when the screen casting operation needs to be performed, the first hardware system may send the Socket information containing the first request to the second hardware system in response to the operational command, and the second hardware system may feed back the Socket information containing the address information to the first hardware system.

Optionally, the second hardware system generates prompting information based on the first request, by which the user is prompted to determine whether to accept the screen casting. If the user selects to accept the screen casting, the second hardware system may feed back the address information to the first hardware system. If the user selects to refuse the screen casting, the second hardware system may feed back notification information to the first hardware system, and notify the first hardware system that the second hardware system refuses the screen casting by the notification information.

Optionally, the cache space may be dedicated to storing the screen casting data. Alternatively, the cache space may also be used for caching the data transmitted between the first hardware system and the second hardware system based on the bus between the systems. For example, the cache space may be a cache space equipped for the bus between the systems, and the data sent based on the bus between the systems may be cached into the cache space. Alternatively, the cache space may also be other cache spaces that can cache the screen casting data. Optionally, the cache space may be a cache space in the memory of the second hardware system or a cache space in the cache of the second hardware system.

Optionally, the second hardware system may have a plurality of cache spaces. The second hardware system may cyclically send the address information of each cache space to the first hardware system based on the screen casting rules.

S230, the screen casting data sent by the first hardware system via the bus based on the address information is acquired, and the screen casting data is saved in the corresponding cache space.

Optionally, the cache space of the second hardware system may be a cache space shared by the first hardware system and the second hardware system. That is, the first hardware system may own the control right of the cache space. At this time, the first hardware system may copy the screen casting data into the cache space based on the address information. Certainly, the cache space may also be a non-shared cache space. At this time, the first hardware system may send the screen casting data to the second hardware system based on the address information, and the second hardware system will cache the screen casting data into the cache space on its own. For example, the second hardware system may create another receiving thread, through which the screen casting data sent by the first hardware system is cached into the cache space.

Optionally, the bus may comprise a plurality of data channels. The first request and the address information may be transmitted between the first hardware system and the second hardware system based on one data channel. The first hardware system may send the screen casting data to the second hardware system based on another data channel to ensure the smooth and continuous transmission of the address information and the screen casting data between the two hardware systems.

S240, the corresponding screen casting content is displayed by the display unit of the second hardware system, based on the screen casting data in the cache space.

Optionally, the second hardware system extracts the screen casting data from the cache space, transmits the screen casting data to the display unit of the second hardware system itself, and displays the corresponding screen casting content by the display unit based on the screen casting data. For example, the second hardware system may transmit the screen casting data to the display controller of the display unit, and the display controller controls the display screen to display the corresponding screen casting content based on the screen casting data.

Optionally, the second hardware system may comprise a plurality of cache spaces. The second hardware system may cyclically extract the screen casting data from each cache space based on the screen casting rules, and control the display unit to display the corresponding screen casting content based on each frame of screen casting data.

Optionally, after extracting the screen casting data from the cache space, the second hardware system may also send the address information of the corresponding cache space to the first hardware system based on the screen casting rules, so that the screen casting operation can be continuously and smoothly executed.

In the screen casting method of the embodiment of the present application, the first request for requesting the screen casting is sent to the second hardware system by the first hardware system when the screen casting operation is required. The second hardware system feeds back the address information to the first hardware system based on the first request, wherein the address information can identify the cache space of the second hardware system. The screen casting data is sent to the cache space by the first hardware system via the bus, based on the address information. The corresponding screen casting content is displayed by the second hardware system based on the screen casting data in the cache space, so as to cast the screen between the first hardware system and the second hardware system. The first hardware system and the second hardware system are connected by the bus, which has a larger bandwidth, and the transmission speed of the data is faster. This is beneficial for improving the smoothness of the display of the screen casting content and lowering the production cost without occupying the bandwidth of the on-board Ethernet.

In some embodiments, in step S120, the address information is fed back to the first hardware system based on the first request, which may comprise the following steps.

S221, the cache space is created in the second hardware system based on the first request.

S222, the address information of the cache space is fed back to the first hardware system.

In this way, it is possible to avoid occupying the storage space of the second hardware system when the screen casting operation is not performed. Optionally, the second hardware system may apply for creating a cache space in the memory of the second hardware system based on the first request, acquire the address information of the cache space, and feed back the address information to the first hardware system.

Optionally, the second hardware system may create a plurality of cache spaces based on the first request, and cyclically feed back the address information of each cache space to the first hardware system based on the screen casting rules. For example, the second hardware system may transmit the screen casting data in the cache space to the display unit based on the screen casting rules, and the corresponding screen casting content is displayed by the display unit based on the screen casting data. After the screen casting data in the cache space is transmitted to the display unit, the address information of the corresponding cache space may be sent to the first hardware system.

In some embodiments, in step S240, the corresponding screen casting content is displayed by the display unit of the second hardware system based on the screen casting data in the cache space, which may comprise the following steps.

S241, the screen casting data is acquired from the cache space by a virtual camera, and the screen casting data is transmitted to the display unit.

S242, the corresponding screen casting content is displayed by the display unit based on the screen casting data.

Optionally, the second hardware system may extract the screen casting data from the cache space by the virtual camera, transmit the screen casting data to the display controller of the display unit by the virtual camera, and control the display screen of the display unit to display the corresponding screen casting content by the display controller based on the screen casting data.

Optionally, the virtual camera may be formed by software. The second hardware system may start the virtual camera when powered on, or may start the virtual camera in response to the first request. Transmitting the screen casting data to the display unit by the virtual camera is not only easy to implement, but also low in cost.

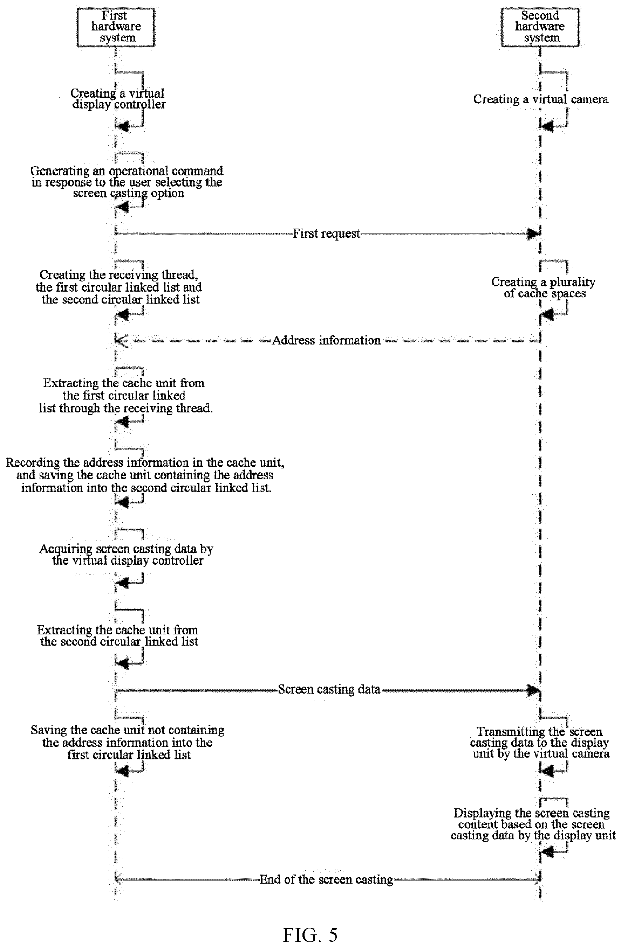

The third embodiment of the present application provides a screen casting method, which is applied to a screen sharing system. The screen sharing system comprises a first hardware system and a second hardware system, and the first hardware system and the second hardware system are connected by a bus. FIG. 5 is a flowchart of the screen casting method of the third embodiment of the present application. With reference to FIG. 5, the screen casting method of the third embodiment of the present application may specifically comprise the following steps.

S311, a virtual display controller is created by a first hardware system.

Optionally, the first hardware system may create the virtual display controller after startup.

S312, a first request is sent to a second hardware system by a first hardware system in response to an operational command instructing to perform a screen casting operation. The first request is used for requesting screen casting to the second hardware system.

S313, a first circular linked list, a second circular linked list, and a receiving thread are created by the first hardware system based on the operational command. The first circular linked list is used for storing the cache unit not containing the address information, and the second circular linked list is used to store the cache unit containing the address information.

5321, a virtual camera is created by the second hardware system.

Optionally, the second hardware system may create a virtual camera after startup.

S322, a plurality of cache spaces are created in the memory of the second hardware system by the second hardware system based on the first request.

S323, the address information of each cache space is cyclically sent to the first hardware system by the second hardware system.

5331, the address information is acquired from the second hardware system through a receiving thread.

S332, it is determined whether there is a cache unit not containing the address information in the first circular linked list through the receiving thread, and if NO, step S333 is executed, and if YES, step S334 is executed.

S333, the acquired address information is returned to the second hardware system through the receiving thread.

S334, the cache unit is extracted from the first circular linked list through the receiving thread, the address information is recorded in the cache unit, and the cache unit containing the address information is added into the second circular linked list.

S341, the screen casting data is acquired by the virtual display controller.

S342, it is determined whether there is a cache unit containing address information in the second circular linked list, and if NO, step S343 is executed, and if YES, step S344 is executed.

S343, the screen casting data of the current frame is discarded.

S344, the cache unit containing address information is extracted from the second circular linked list.

S345, the screen casting data is sent to the cache space via the bus based on the address information extracted from the cache unit.

S346, the cache unit not containing the address information is added into the first circular linked list.

5351, the screen casting data is cyclically extracted from each cache space by the virtual camera, and the screen casting data is transmitted to the display unit of the second hardware system.

S352, the corresponding screen casting content is displayed by the display unit based on the screen casting data. In the process of screen casting, step S323 to step S352 are cyclically executed.

5361, a termination instruction is generated by the first hardware system or the second hardware system, and the termination instruction is used for instructing to stop the screen casting.

S362, the first hardware system and the second hardware system stop the screen casting in response to the termination instruction.

Optionally, when the user needs to stop the screen casting, the user may select a stop screen casting option through the first hardware system or the second hardware system, causing the first hardware system or the second hardware system to generate the termination instruction. The first hardware system and the second hardware system stop screen casting based on the termination instruction.

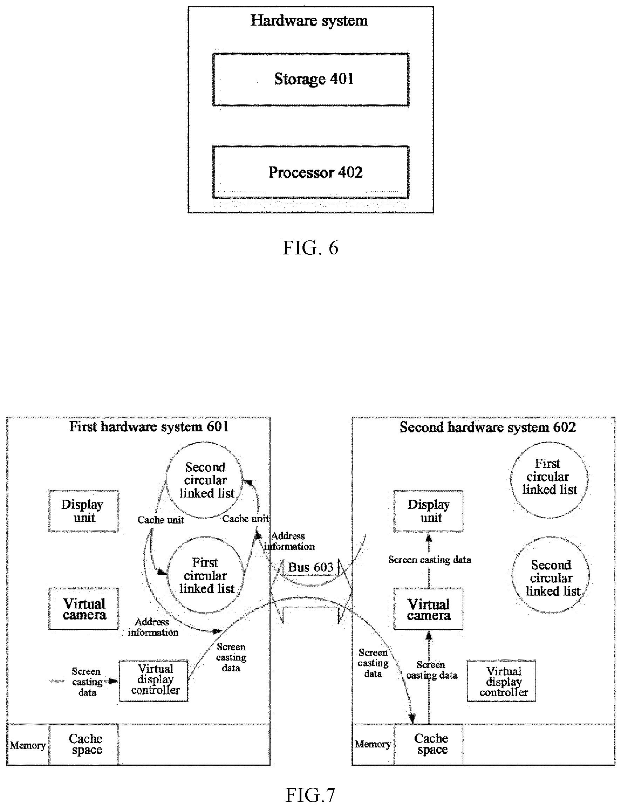

With reference to FIG. 6, the fourth embodiment of the present application provides a hardware system, which at least comprises a storage 401 on which a program is stored and a processor 402. When the hardware system serves as the first hardware system, the processor 402 implements the screen casting method described in the first embodiment when executing the program on the storage 401. Optionally, when the hardware system serves as the second hardware system, the processor 402 implements the screen casting method described in the second embodiment when executing the program on the storage 401.

The fifth embodiment of the present application provides a computer-readable storage medium in which computer-executable instructions are stored, and when the computer-executable instructions in the computer-readable storage medium are executed, the screen casting method described in any embodiment is implemented.

With reference to FIG. 7, a screen sharing system according to the sixth embodiment of the present application comprises a first hardware system 601 on a fist die of a SOC and a second hardware system 602 on a second die of the SOC, and the first hardware system 601 and the second hardware system 602 are connected by a DCI bus 603.

The first hardware system 601 is configured to send a first request for requesting screen casting to the second hardware system 602.

The second hardware system 602 is configured to feed back address information to the first hardware system 601 based on the first request, and the address information is used for identifying the cache space of the hardware system.

The first hardware system 601 is further configured to send the screen casting data of the first hardware system 601 to the cache space via the DCI bus 603 based on the address information.

The second hardware system 602 is further configured to display the corresponding screen casting content by the display unit of the second hardware system 602 based on the screen casting data in the cache space.

In some embodiments, the first hardware system 601 is specifically configured to acquire the address information fed back by the second hardware system 602; extract the cache unit from the first circular linked list; record the address information in the cache unit; add the cache unit containing the address information to a second circular linked list.

In some embodiments, the first hardware system 601 is specifically configured to acquire the screen casting data of the first hardware system 601; extract the cache unit containing the address information from the second circular linked list; send the screen casting data to the cache space via the DCI bus 603 based on the address information extracted from the cache unit; add a cache unit not containing the address information to the first circular linked list.

In some embodiments, the first hardware system 601 is specifically configured to acquire the screen casting data of the first hardware system 601 by a virtual display controller.

In some embodiments, the first hardware system 601 is further configured to discard the screen casting data of the first hardware system 601 in the case that there is no cache unit containing the address information in the second circular linked list.

In some embodiments, the first hardware system 601 is further configured to return the acquired address information to the second hardware system 602 in the case that there is no cache unit in the first circular linked list.

In some embodiments, the second hardware system 602 is specifically configured to create the cache space in the second hardware system 602 based on the first request; and feed back the address information of the cache space to the first hardware system 601.

In some embodiments, the second hardware system 602 is specifically configured to acquire the screen casting data from the cache space by a virtual camera and transmit the screen casting data to the display unit; display the corresponding screen casting content by the display unit based on the screen casting data.

The seventh embodiment of the present application provides a transportation means, which comprises the screen sharing system as described above. Optionally, the transportation means comprises, but is not limited to, a vehicle, a ship, an airplane and the like.

It should be understood by those skilled in the art that embodiments of the present application may be provided as a method, an electronic device, a computer-readable storage medium, or a computer program product. Therefore, the present application may take the form of a fully hardware embodiment, a fully software embodiment, or a combination of software and hardware embodiments. Furthermore, the present application may take the form of a computer program product implemented on one or more computer-usable storage mediums containing computer-usable program codes. When implemented by software, these functions may be stored in a computer-readable medium or transmitted as one or more instructions or codes on a computer-readable medium.

The above processor may be a general-purpose processor, a digital signal processor, an application-specific integrated circuit (ASIC), a programmable logic device (PLD), or a combination thereof. The above PLD may be a complex programmable logic device (CPLD), a field-programmable gate array (FPGA), a generic array logic (GAL), or any combination thereof. The general processor may be a microprocessor or any conventional processor, etc.

The above storage may comprise a volatile memory, a random access memory (RAM), and/or a nonvolatile memory in the computer-readable medium, such as a read-only memory (ROM) or flash RAM. The storage is an example of the computer-readable medium.

The readable storage medium may be a magnetic disk, an optical disk, a DVD, a USB, a read-only memory (ROM), or a random access memory (RAM) and the like. The specific form of the storage medium is not limited in the present application.

The above embodiments are only exemplary embodiments of the present application, and are not used to limit the present application. The protection scope of the present application is defined by the claims. Those skilled in the art can make various modifications or equivalent substitutions within the substance and protection scope of the present application, and such modifications or equivalent substitutions should also be regarded as falling within the protection scope of the present application.

## Claims

1. A screen casting method, comprising:
sending a first request for requesting screen casting to a second hardware system by a first hardware system; wherein, the first hardware system and the second hardware system are connected by a bus;
acquiring address information fed back by the second hardware system based on the first request, wherein the address information is used for identifying a cache space of the second hardware system;
sending screen casting data of the first hardware system to the cache space via the bus based on the address information, wherein the screen casting data is used for the second hardware system to display the corresponding screen casting content.

2. The method according to claim 1, wherein acquiring the address information fed back by the second hardware system based on the first request comprises:
acquiring the address information fed back by the second hardware system;
extracting a cache unit from a first circular linked list;
recording the address information in the cache unit;
adding the cache unit containing the address information into a second circular linked list.

3. The method according to claim 2, wherein sending the screen casting data of the first hardware system to the cache space via the bus based on the address information comprises:
acquiring the screen casting data of the first hardware system;
extracting a cache unit containing the address information from the second circular linked list;
sending the screen casting data to the cache space via the bus based on the address information extracted from the cache unit;
adding a cache unit not containing the address information into the first circular linked list.

4. The method according to claim 3, wherein acquiring the screen casting data of the first hardware system comprises:
acquiring the screen casting data of the first hardware system by a virtual display controller.

5. The method according to claim 3, wherein further comprising:
discarding the screen casting data of the first hardware system, in the case that there is no cache unit containing the address information in the second circular linked list.

6. The method according to claim 2, wherein further comprising:
returning the acquired address information to the second hardware system, in the case that there is no cache unit in the first circular linked list.

7. The method according to claim 1, wherein sending the screen casting data of the first hardware system to the cache space via the bus based on the address information comprises:
sequentially sending the screen casting data to the corresponding cache space among a plurality of cache spaces of the second hardware system based on each address information cyclically fed back by the second hardware system.

8. A screen casting method, comprising:
acquiring, by a second hardware system, a first request sent by a first hardware system; wherein, the first hardware system and the second hardware system are connected by a bus, and the first request is used for requesting screen casting to the second hardware system;
feeding back address information to the first hardware system based on the first request, wherein the address information is used for identifying a cache space of the second hardware system;
acquiring screen casting data sent by the first hardware system via the bus based on the address information, and saving the screen casting data in the corresponding cache space;
displaying the corresponding screen casting content by a display unit of the second hardware system based on the screen casting data in the cache space.

9. The method according to claim 8, wherein feeding back the address information to the first hardware system based on the first request comprises:
creating the cache space in the second hardware system based on the first request;
feeding back the address information of the cache space to the first hardware system.

10. The method according to claim 8, wherein displaying the corresponding screen casting content by the display unit of the second hardware system based on the screen casting data in the cache space comprises:
acquiring the screen casting data from the cache space by a virtual camera and transmitting the screen casting data to the display unit;
displaying the corresponding screen casting content based on the screen casting data by the display unit.

11. The method according to claim 8, further comprising:
cyclically feeding back the address information of a plurality of cache spaces of the second hardware system to the first hardware system based on the screen casting rules by the second hardware system.

12. A hardware system comprising at least a storage on which a program is stored and a processor;
the hardware system serves as a first hardware system, and the processor implements the method of any one of claims 1 to 7 when executing the program on the storage; or
the hardware system serves as a second hardware system, and the processor implements the method of any one of claims 8-11 when executing the program on the storage.

13. A computer-readable storage medium in which computer-executable instructions are stored, wherein when the computer-executable instructions in the computer-readable storage medium are executed, the method according to any one of claims 1 to 7 is implemented, or the method according to any one of claims 8 to 11 is implemented.

14. A screen sharing system, comprising a first hardware system and a second hardware system, wherein the first hardware system and the second hardware system are connected by a bus;
the first hardware system is configured to send a first request for requesting screen casting to a second hardware system;
the second hardware system is configured to feed back address information to the first hardware system based on the first request, the address information is used for identifying a cache space of the hardware system;
the first hardware system is further configured to send screen casting data of the first hardware system to the cache space via the bus based on the address information;
the second hardware system is further configured to display the corresponding screen casting content by the display unit of the second hardware system based on the screen casting data in the cache space.

15. A transportation means comprising the screen sharing system according to claim 14.
